# EUROPEAN PATENT APPLICATION

(11) **EP 2 018 978 A1**
(43) Date of publication of application: **28.01.2009**
(21) Application number: 07743264.9
(22) Date of filing: 14.05.2007
(51) Int. Cl.: B60C 9/20, B60C 1/00, B60C 9/00

(54) **PNEUMATIC TIRE**

(30) Priority: 15.05.2006 JP 2006135433
(71) Applicant: Bridgestone Corporation, Tokyo 104-0031 (JP)
(72) Inventor: KITAHARA, Kouta, Kodaira-shi, Tokyo 187-0031 (JP)
(74) Representative: Whalley, Kevin
(86) International application number: PCT/JP2007/059829
(87) International publication number: WO 2007/132798

(57) **Abstract**

A pneumatic tire in which lightweight of the tire and durability of a belt are highly compatible by suppressing occurrence of belt edge separation while realizing a reduction in weight of the tire is provided.

Each of a first belt layer 5a which is a first layer of a belt and a second belt layer 5b which is a second layer thereof is configured so that drawn and arranged monofilament cords 6 each having a filament diameter in the range of 0.18 to 0.26 mm are embedded in a coating rubber 8 while being juxtaposed in a belt width direction in a unit of a bundle of five to seven of the monofilament cords 6, and the gauge of a layer of the rubber between the monofilament cords 6 in the first belt layer and monofilament cords 6 in the second belt layer at an edge of the second belt layer is 1.3 to 3.0 times the gauge thereof at the central portion of the tire.

## Description

### Technical Field

The present invention relates to a pneumatic tire (hereinafter also simply referred to as "tire"). More specifically, the present invention relates to a pneumatic tire in which durability and lightweight are compatible by improving a belt cord, and in particular, to a pneumatic tire suitable for use in passenger cars.

### Background Art

Recently, in order to improve the fuel consumption of automobiles, there has been a pressing need to reduce the weight of tires. In considering the reduction in weight of a belt portion including existing twisted steel cords, when it is supposed that a certain degree or more of tensile strength is ensured, there is no choice but to reduce the coating gauge of a steel belt layer.

From the above standpoint, techniques in which metal monofilaments are used as cords for a belt without twisting have been developed, and various types of such techniques have been proposed. For example, for the purpose of improving fuel consumption and improving riding comfort, Patent Document 1 proposes a pneumatic radial tire including a belt configured so that drawn and arranged metal wires (monofilaments) are embedded in a rubber while being juxtaposed in a width direction of the belt in a unit of a bundle of three or four of the metal wires (monofilaments) without twisting. In addition, in order to meet the needs of reduction in weight of a tire and to solve a problem such as a decrease in durability caused by breakage of a metal wire, Patent Document 2 proposes a pneumatic radial tire including a belt layer composed of three belt plies in which metal monofilaments are embedded in a coating rubber while being arranged in a belt ply width direction under a predetermined condition.

Furthermore, in order to suppress occurrence of belt edge separation and to obtain a pneumatic radial tire in which both improvement in durability of a belt and reduction in weight of the tire are realized, Patent Document 3 discloses a technique in which the gauge between monofilament cords in a first belt and monofilament cords in a second belt at an edge of a second belt layer which is a second layer is made to be 1.3 to 3.0 times the gauge at the central portion of the tire.
Patent Document 1: Japanese Unexamined Patent Application Publication No. 11-208210 (Claims etc.)
Patent Document 2: Japanese Unexamined Patent Application Publication No. 2001-334810 (Claims etc.)
Patent Document 3: Japanese Unexamined Patent Application Publication No. 2005-349999 (Claims etc.)

### Disclosure of Invention

### Problems to be Solved by the Invention

As proposed to date, by using monofilament cords in a belt, a rubber gauge between layers can be ensured even when the gauge between the centers of the cords is designed together, and the reduction in weight of a tire can be realized by designing the gauge between the layers together. On the other hand, however, the following problems occur. First, there is a problem that the interval between cords in a radial direction of the tire becomes small, and thus cracks from adjacent cords easily propagate. Next, there is a problem that the amount of steel cords used in a belt surface is large, and thus the interlayer shear strain increases. As a result of these problems, belt edge separation (BES) easily occurs in a belt including monofilament cords, as compared with a case where general twisted cords are used. The occurrence of BES can be suppressed by increasing the gauge of a coating rubber. However, since the weight increases accordingly, this is contrary to the reduction in weight of the tire, which is the desired goal.

According to the technique described in Patent Document 3, in a tire in which monofilament cords are used in a belt layer, by increasing the gauge of an inter-belt rubber at a belt edge, which may become a starting point of BES, strain at the belt edge can be suppressed to improve BES resistance. In this case, however, satisfactory BES resistance cannot be achieved in some arrangement conditions of the cords. Accordingly, a technique for achieving better BES resistance has been desired.

Accordingly, it is an object of the present invention to solve the above problems in the related art and to provide a pneumatic tire in which lightweight of the tire and durability of a belt are highly compatible by suppressing the occurrence of belt edge separation while realizing a reduction in weight of the tire.

### Means for Solving the Problems

As a result of intensive studies, the inventor of the present invention has found that, in a belt including monofilament cords, in addition to an increase in the rubber gauge between the cords, by limiting the filament diameter of the cords and the number of the cords to predetermined ranges, a problem of crack propagation between adjacent cords and a problem related to BES resistance in a tire having a large interlayer shear strain, which are characteristic problems in monofilament cords, can be solved, and that a tire in which lightweight and durability are more highly compatible can be obtained. This finding led to the completion of the present invention.

More specifically, the present invention provides a pneumatic tire including a carcass composed of at least one carcass layer toroidally extending over a pair of bead cores disposed at the right side and the left side; a tread portion provided outside a crown area of the carcass in a radial direction of the tire to form a ground portion; and a belt composed of at least two belt layers and disposed between the tread portion and the crown area of the carcass to form a reinforcing portion,
wherein each of a first belt layer which is a first layer of the belt and a second belt layer which is a second layer thereof is configured so that drawn and arranged monofilament cords each having a filament diameter in the range of 0.18 to 0.26 mm are embedded in a coating rubber while being juxtaposed in a belt width direction in a unit of a bundle of five to seven of the monofilament cords, and the gauge of a layer of the rubber between the monofilament cords in the first belt layer and monofilament cords in the second belt layer at an edge of the second belt layer is 1.3 to 3.0 times the gauge thereof at the central portion of the tire.

In the present invention, the distance between the bundles of the monofilament cords in the belt width direction is preferably more than 0.4 mm and less than 1.2 mm. In the present invention, preferably, the number of bundles of the monofilament cords embedded is in the range of 18 to 32 bundles/50 mm.

### Advantages

According to the present invention, by using monofilament cords in a belt, the weight of the tire can be reduced. Regarding the consequent concern about durability of the belt, by selecting a proper gauge of a rubber layer provided between monofilament cords, and in addition, by limiting the filament diameter of the cords and the number of cords to predetermined ranges, the occurrence of belt edge separation can be more effectively suppressed. As a result, a pneumatic tire in which reduction in weight of the tire and improvement in durability of the belt are highly compatible can be realized.

### Brief Description of Drawings

Fig. 1 is a half cross-sectional view showing a pneumatic tire according to a preferred embodiment of the present invention.
Fig. 2 is an enlarged, partial cross-sectional view showing near an edge of a belt layer.

### Reference Numerals

- 1: tread portion
- 2: sidewall portion
- 3: bead portion
- 4: carcass
- 5a: first belt layer
- 5b: second belt layer
- 6: monofilament cord
- 7: inter-belt rubber
- 8: belt coating rubber

### Best Mode for Carrying Out the Invention

A preferred embodiment of the present invention will now be described with reference to the drawings.

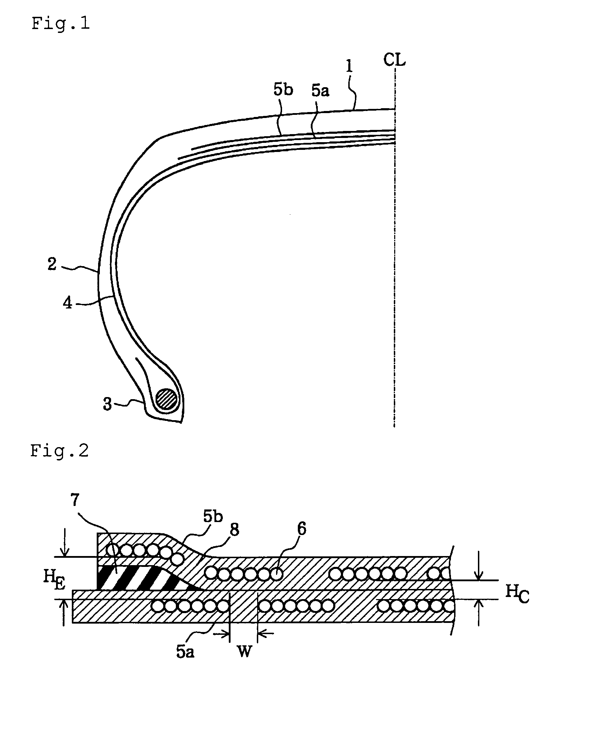

Fig. 1 is a pneumatic tire according to an embodiment of the present invention. The tire shown in the figure includes a tread portion 1 provided in a crown area of a carcass and forming a ground portion, a pair of sidewall portions 2 extending inwards in a radial direction of the tire from both sides of the tread portion 1, and bead portions 3 that are continuous to the inner circumferences of the sidewall portions 2.

The tread portion 1, the sidewall portions 2, and the bead portions 3 are reinforced by a carcass 4 composed of a single carcass layer toroidally extending from one of the bead portions 3 to the other bead portion 3. In addition, the tread portion 1 is reinforced by a belt, which will be described in detail below, composed of at least two layers, in the example shown in the figure, two layers of a first belt layer 5a and a second belt layer 5b, provided outside the crown area of the carcass 4 in the radial direction of the tire. Here, the number of carcass layers of the carcass 4 may be two or more. Organic fiber cords extending substantially orthogonal to, for example, at an angle in the range of 70° to 90° with respect to, the circumferential direction of the tire can be suitably used.

Fig. 2 shows an enlarged cross-section in the width direction of an edge of the belt in the tire of the present invention. As shown in the figure, in the present invention, each of the first belt layer 5a which is a first layer of the belt and the second belt layer 5b which is a second layer thereof is configured so that drawn and arranged monofilament cords 6 are embedded in a coating rubber 8 while being juxtaposed in a belt width direction in a unit of a bundle of five to seven of the monofilament cords 6, in the example shown in the figure, six of the monofilament cords 6.

That is, as described above, in order to suppress strain of a belt edge, which may become a starting point of BES, BES resistance can be improved by increasing the gauge of the rubber between cords. However, when the distance between cords in the tire width direction, i.e., a cord interval W, is small; 0.4 mm or less, cracks easily connect between adjacent cords, and the effect of the presence of the inter-belt rubber alone is not sufficient. Consequently, the BES resistance is inferior to that in the case of existing cords. On the other hand, when the cord interval W is extremely large; 1.2 mm or more, cracks rapidly propagate along the cords, which also results in inferior BES resistance. Consequently, in the present invention, by using monofilament cords in the belt in the form of a bundle composed of five to seven monofilament cords, the total strength is maintained, and by ensuring the cord interval W in an appropriate range, satisfactory BES resistance is realized. Accordingly, for the reason described above, in the present invention, the distance W between monofilament cord bundles in the belt width direction is preferably more than 0.4 mm and less than 1.2 mm.

In addition, considering the belt breakage resistance, it is necessary to make the filament diameter of the monofilament cords in the range of 0.18 to 0.26 mm, in particular, in the range of 0.20 to 0.24 mm. When the filament diameter is smaller than 0.18 mm, the buckling wavelength in a figure-eight turning driving becomes short, and surface strain generated during the driving increases. As a result, the belt breakage resistance becomes poor. On the other hand, when the filament diameter is larger than 0.26 mm, surface strain increases. This case also results in poor belt breakage resistance.

Furthermore, the tensile strength of the monofilament cord 6 is preferably 2,700 N/mm² or more. As a monofilament cord having a high tensile strength, a monofilament cord containing at least 0.7 % by mass, in particular, at least 0.8 % by mass of carbon can be preferably used.

Furthermore, in the present invention, a gauge HE of the rubber layer between the monofilament cords 6 in the first belt layer 5a and the monofilament cords 6 in the second belt layer 5b at the edge of the second belt layer 5b is 1.3 to 3.0 times, preferably 1.8 to 2.6 times a gauge H_{c} thereof at the central portion of the tire. By providing the inter-belt rubber with a thick gauge between monofilament cords coated with thin gauges at the belt edge, lightweight of the tire and durability of the belt can be compatible. When this value is less than 1.3 times, belt edge separation cannot be satisfactorily suppressed. On the other hand, when this value exceeds 3.0 times, reduction in weight of the tire is not sufficient.

Accordingly, in the present invention, monofilament cords satisfying the above predetermined filament diameter are used in the belt in the form of bundles each composed of a predetermined number of cords, and the rubber gauge at the belt edge is increased to 1.3 to 3.0 times the gauge at the center while ensuring a cord interval. Accordingly, a desired BES resistance can be ensured without degrading the belt breakage resistance. As a result, a pneumatic tire in which good durability and lightweight are compatible can be obtained.

In the present invention, the number of monofilament cord bundles embedded is preferably in the range of about 18 to 32 bundles/50 mm. When the number of bundles embedded is excessively small, it is difficult to ensure the tensile strength. When the number of bundles embedded is excessively large, it is difficult to ensure the cord interval. Therefore, an excessively small number of bundles embedded and an excessively large number of bundles embedded are not preferable.

In the present invention, in order to make the gauge HE of the rubber layer between the monofilament cords 6 of the first belt layer 5a and the monofilament cords 6 of the second belt layer 5b at the belt edge larger than the gauge H_{c} at the central portion of the tire as described above, an inter-belt rubber 7 may be provided between the first belt layer 5a and the second belt layer 5b at the edge of the second belt layer 5b. The modulus of elasticity of the inter-belt rubber 7 is preferably 1.02 to 2.0 times, in particular, 1.1 to 1.8 times the modulus of elasticity of the belt coating rubber 8. When the modulus of elasticity is within this range, strain at the belt edge is satisfactorily suppressed, and reduction in weight of the tire and durability of the belt can be highly compatible.

In addition, the loss tangent tan δ (25°C) of the inter-belt rubber 7 is preferably 0.20 or less, and in particular, 0.85 to 0.98 times tan δ (25°C) of the belt coating rubber 8. By using a rubber with such a low loss as the inter-belt rubber 7, strain at the belt edge is suppressed, and an increase in the tire temperature is suppressed.

Furthermore, in the present invention, a bismaleimide is preferably incorporated with the inter-belt rubber 7 in an amount in the range of 0.5 to 3.0 parts by weight relative to 100 parts by weight of a rubber component. Thereby, a low loss tangent tan δ (25°C) can be realized while improving the modulus of elasticity. As the bismaleimide, bismaleimides represented by general formula (1) below can be preferably used: 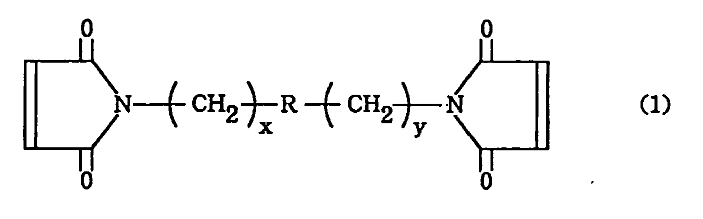 (wherein R represents an aromatic group having 6 to 18 carbon atoms or an alkyl aromatic group having 7 to 24 carbon atoms, and x and y independently represent an integer of 0 to 3). Specific examples thereof include N,N'-1,2-phenylene bismaleimide, N,N'-1,3-phenylene bismaleimide, N,N'-1,4-phenylene bismaleimide, N,N'-(4,4'-diphenylmethane)bismaleimide, 2,2-bis[4-(4-maleimidophenoxy)phenyl]propane, and bis(3-ethyl-5-methyl-4-maleimidophenyl) methane. N,N'-(4,4'-diphenylmethane)bismaleimide is particularly preferable. The rubber composition can contain at least one of these bismaleimides.

The embedding angles of the cords in the first belt layer 5a and the second belt layer 5b, which are belt layers at the carcass 4 side, are preferably in the range of 10° to 30° with respect to the circumferential direction of the tire. In addition, the first belt layer 5a and the second belt layer 5b cross each other.

The tire of the present invention relates to an improvement in the belt structure. Other structures and the materials are not particularly limited, and known structures and materials can be used.

### EXAMPLES

The present invention will now be specifically described using Examples.

Pneumatic tires each having a structure including two layers of steel belts shown in Fig. 1 were produced under the conditions shown in Table 1 below. The tire size was 195/65R15, and the embedding angles of monofilament cords 6 of a first belt layer 5a and a second belt layer 5b were +22° and -22°, respectively, with respect to the circumferential direction of the tires. An inter-belt rubber 7 having a rubber composition containing 100 parts by weight of natural rubber, 50 parts by weight of carbon black (N330), 1.0 part by weight of a cobalt salt (cobalt naphthenate), 10 parts by weight of zinc oxide, 1.0 part by weight of a vulcanization accelerator (N,N'-dicyclohexyl-2-benzothiazolylsulfenamide, produced by Ouchi Shinko Chemical Industrial Co., Ltd., Nocceler DZ), 6.0 parts by weight of sulfur, and 2.0 parts by weight of a bismaleimide (N,N'-(4,4'-diphenylmethane bismaleimide)) was used.

The resulting tires of Examples and Comparative Examples were evaluated in terms of the degree of increase in the weight (difference in the weight) using Comparative Example 1 as a standard. Furthermore, BES resistance was evaluated as described below. The results are also shown in Table 1 below.

### (Evaluation of BES resistance)

Each of the tire samples was combined with a normal rim specified in The Japan Automobile Tyre Manufacturers Association, Inc. (JATMA), and filled to have an inner pressure of 220 kPa. Driving was performed on a BES drum while applying a constant side force (SF). The tire samples were then analyzed to measure the length of cracks generated at an edge of belt layers. The length of a crack in each of the tire samples was represented as an index when the length of a crack in the tire of Comparative Example 1 was defined as 100. A smaller value of this index means more satisfactory BES resistance.

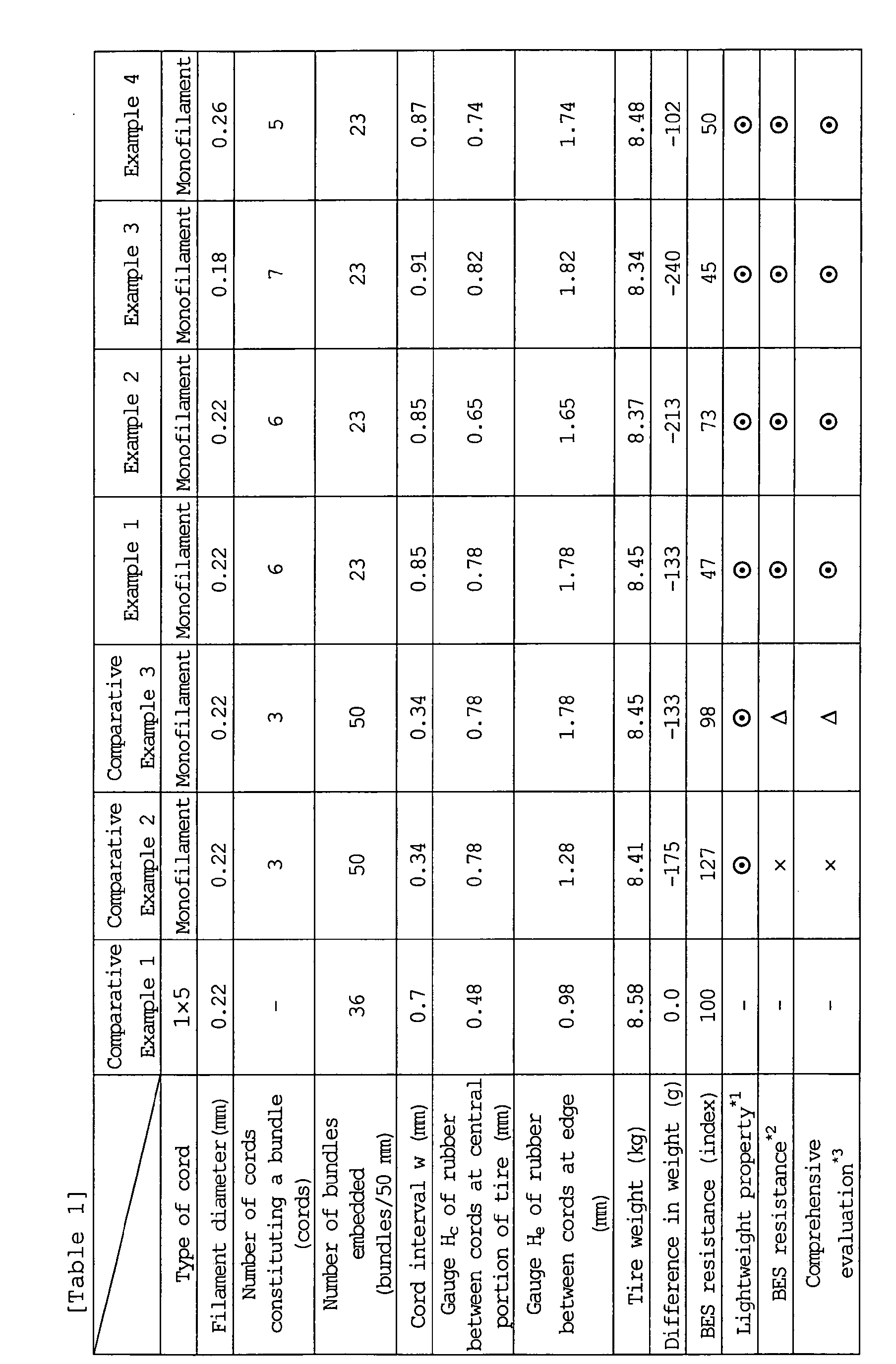

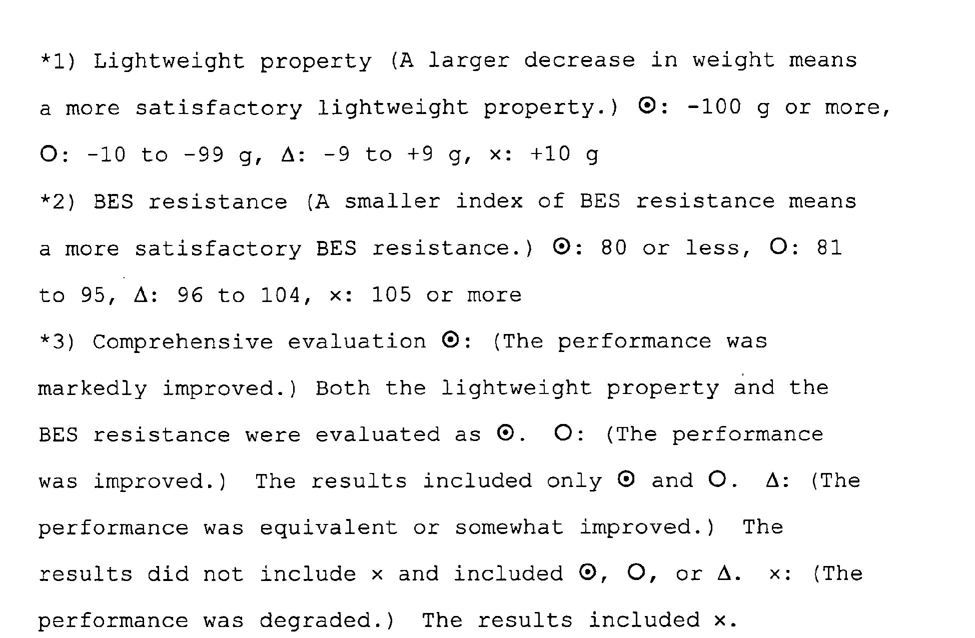

As shown in Table 1, in the tires of Examples 1 to 4 in which monofilament cords were used in each of the two belt layers, the gauge of the rubber between the cords at the edge of the belt layers was thicker than the gauge thereof at the central portion of the tires at a predetermined ratio, and the filament diameter of the cords and the number of cords were limited to predetermined ranges, it was confirmed that both the lightweight property and the BES resistance were improved, as compared with those Comparative Example 1, which included existing twisted cords. In contrast, regarding the tires of Comparative Examples 2 and 3, in which monofilament cords were used but the number of cords constituting a bundle was small, the lightweight property was improved, but improvement in the BES resistance was insufficient.

## Claims

1. A pneumatic tire comprising a carcass composed of at least one carcass layer toroidally extending over a pair of bead cores disposed at the right side and the left side; a tread portion provided outside a crown area of the carcass in a radial direction of the tire to form a ground portion; and a belt composed of at least two belt layers and disposed between the tread portion and the crown area of the carcass to form a reinforcing portion,
wherein each of a first belt layer which is a first layer of the belt and a second belt layer which is a second layer thereof is configured so that drawn and arranged monofilament cords each having a filament diameter in the range of 0.18 to 0.26 mm are embedded in a coating rubber while being juxtaposed in a belt width direction in a unit of a bundle of five to seven of the monofilament cords, and the gauge of a layer of the rubber between the monofilament cords in the first belt layer and monofilament cords in the second belt layer at an edge of the second belt layer is 1.3 to 3.0 times the gauge thereof at the central portion of the tire.

2. The pneumatic tire according to Claim 1, wherein the distance between the bundles of the monofilament cords in the belt width direction is more than 0.4 mm and less than 1.2 mm.

3. The pneumatic tire according to Claim 1, wherein the number of bundles of the monofilament cords embedded is in the range of 18 to 32 bundles/50 mm.

4. The pneumatic tire according to Claim 1, further comprising an inter-belt rubber disposed between the first belt layer and the second belt layer at the edge of the second belt, wherein the modulus of elasticity of the inter-belt rubber is 1.02 to 2.0 times the modulus of elasticity of the coating rubber.

5. The pneumatic tire according to Claim 4, wherein tan δ (25°C) of the inter-belt rubber is 0.20 or less.

6. The pneumatic tire according to Claim 4, wherein tan δ (25°C) of the inter-belt rubber is 0.85 to 0.98 times tan δ (25°C) of the belt coating rubber.

7. The pneumatic tire according to Claim 4, wherein the inter-belt rubber contains a bismaleimide in an amount of 0.5 to 3.0 parts by weight relative to 100 parts by weight of a rubber component.
